# EUROPÄISCHE PATENTSCHRIFT

(11) **EP 0 835 277 B1**
(45) Veröffentlichungstag und Bekanntmachung des Hinweises auf die Patenterteilung: **17.09.2003**
(21) Anmeldenummer: 96922819.6
(22) Anmeldetag: 17.06.1996
(51) Int. Cl.: C08G 75/02, C08G 75/14, C08G 75/18, C08G 75/20, C08J 5/22, A01N 57/18, B01J 39/12, B01D 61/42, C25B 13/04

(54) **POLYARYLENSULFIDE MIT POLYMER GEBUNDENEN PHOSPHONIUMSALZEN UND VERFAHREN ZU DEREN HERSTELLUNG**
POLYARYLENE SULPHIDES WITH POLYMER-BOUND PHOSPHONIUM SALTS AND PROCESS FOR PRODUCING THEM
SULFURES DE POLYARYLENE AVEC SELS PHOSPHONIUM A LIAISON POLYMERE ET PROCEDE POUR LEUR PREPARATION

(30) Priorität: 30.06.1995 DE 19523861; 15.12.1995 DE 19546912
(43) Veröffentlichungstag der Anmeldung: 15.04.1998
(73) Patentinhaber: Celanese Ventures GmbH, 65926 Frankfurt am Main (DE)
(72) Erfinder: WITTELER, Helmut, D-65929 Frankfurt am Main (DE)
(86) Internationale Anmeldenummer: EP9602609
(87) Internationale Veröffentlichungsnummer: WO97002308

(56) Entgegenhaltungen:
- WO-A-94/10214
- DE-A- 3 136 255
- DATABASE WPI Derwent Publications Ltd., London, GB; AN 91-152198 XP002014958 & JP,A,03 086 704 (IHARA CHEM IND) , 11.April 1991

## Beschreibung

Die Erfindung betrifft Polyarylensulfide, -sulfoxide und -sulfone, die mit Triphenyl-phosphoniumgruppen substituiert sind, ein Verfahren zur Herstellung dieser Verbindungen sowie deren Verwendung zur Herstellung von Membranen.

Polymergebundene Tetraalkylphosphoniumsalze sind von großem Interesse für die Herstellung von Ionenaustauschern (US-A-4 043 948), Phasentransferkatalysatoren (Tomoi et al., J. Am. Chem. Soc. 103, 3821-3828, (1981)) sowie deren Einsatz als Biozide (Endo et al. J. Appl. Polymer Sci., 52, 641-647, (1994)).

Thermisch stabiler als Tetraalkylphosphoniumsalze sind die entsprechenden Tetraarylphosphoniumsalze (Houben-Weyl Bd. 12/1, S.47). Für Anwendungszwecke, bei denen eine hohe thermische Beständigkeit erforderlich ist, ist daher die Verwendung von Tetraarylphosphoniumsalzen der Verwendung von Alkylphosphoniumsalzen vorzuziehen. Zu diesem Zweck muß auch das Trägerpolymer eine genügend hohe thermische Beständigkeit aufweisen. Dies ist der Fall bei Polyarylensulfiden und ihren Oxidationsprodukten mit Sulfoxidgruppen und Sulfongruppen, beispielsweise Poly-(1,4-phenylensulfid).

Die Herstellung von Tetraarylphosphoniumsalzen erfolgt allgemein aus dem entsprechenden Arylhalogenid und Triphenylphosphin, wobei katalytisch wirksame Übergangsmetalle zum Einsatz kommen (Houben Weyl Bd. E1, S. 518-525). Ferner können neben Arylhalogeniden auch Dehydroaromaten, Diaryljodoniumsalze oder Chinone als Ausgangsmaterialien verwendet werden.

An isobutylenpolymere, Kautschuk, Neopren oder Polyethylen gebundene Tetraarylphosphonium-tetraphenylborate werden in PCT/US 93/10027 beschrieben. Das entsprechende Phosphin wird hierbei mit dem halogenierten Polymer und einem Alkaliborat in Toluol oder Tetrahydrofuran umgesetzt.

Die bisher bekannten Phosphoniumsalze besitzen den Nachteil, daß sie entweder chemisch und thermisch unbeständig sind, insbesondere dann wenn am Phosphor ein aliphatischer Rest hängt oder aber, daß sie in den gebräuchlichen Lösungsmitteln unlöslich sind. Ferner ist ihre Herstellung meist nur unter großem technischen Aufwand möglich und daher unwirtschaftlich.

Aufgabe der Erfindung war es daher lösliche, thermisch und chemisch stabile Phosphonium lonomere, die sich auf einfachem und wirtschaftlichem Wege herstellen lassen, bereitzustellen.

Die vorliegende Erfindung löst diese Aufgabe und betrifft polymere Phosphonium lonomere, die als statistische Copolymere aus den Einheiten (1) und (2) aufgebaut sind

―Ar-X― (1)

und 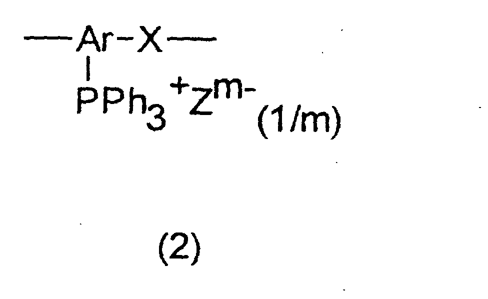 worin
Ar- für ein Phenylen-, insbesondere einen 1,3- oder 1,4-Phenylenrest, Biphenylen-, Naphthylen-, Anthrylen- oder einen anderen zweiwertigen aromatische Rest steht und innerhalb der Polymerkette verschiedene Einheiten bedeuten kann;
-X- ist eine -S-, -SO- und/oder -SO₂- Einheit;
wobei -X- innerhalb der Polymerkette gegebenfalls bis zu 3 verschiedene Einheiten bedeutet,
Z ist ein ein- oder mehrwertiges Gegenion:
Ph steht für einen Phenylrest;
m ist die Ladung des Gegenions
und wobei der mittlere Polymerisationsgrad, d.h. die mittlere Anzahl aller Einheiten (1) und (2) in einer Polymerkette, im Bereich von 3 bis 2000, vorzugsweise im Bereich von 100 bis 1000 liegt.

Der mittlere Anteil der Einheiten (2) im Polymer liegt im Bereich von 0 bis 100 mol%, vorzugsweise im Bereich von 5 bis 95 mol%.

Das Polymer kann gegebenenfalls über -X-, -Ar- und/oder X-Ar-X-Einheiten vernetzt sein.

Ar steht insbesondere für einen 1,4-Phenylen oder einen 1,4- und einen 1,3-Phenylenrest.

Bei dem erfindungsgemäßen Phosphonium lonomer stellt Z beispielsweise mindestens ein lon ausgewählt aus der folgenden Gruppe dar: CO₃²⁻, CN⁻, OCN⁻, Hal⁻, insbesondere Br⁻, Cl⁻, J⁻, OH⁻, NO₃⁻, SO₃²⁻, SO₂²⁻ oder SCN⁻, Insbesondere ist Z Br⁻, Cl⁻, J⁻ oder OH⁻.
Ein Teil der Ar-Einheiten, vorzugsweise 5 bis 50%, kann noch weiterhin mit Brom substituiert sind.

Das mittlere Molekulargewicht des erfindungsgemäßen Triphenylphosphoniumpolyarylensulfids liegt im Bereich von 4000 bis 300 000 g/mol, insbesondere im Bereich von 30 000 bis 200 000.

In einer bevorzugten Ausführungsform können entweder alle Ar-Einheiten mindestens eine Triphenylphosphoniumgruppe PPh₃⁺ Zm-_{(1/m)} als Substituent tragen oder einige Ar- Einheiten tragen zwei Triphenylphosphoniumgruppen PPh₃⁺ Z^{m-}_{(1/m)} als Substituent, wobei die restlichen Ar-Einheiten keine oder nur eine PPh₃⁺ Z^{m-}_{(1/m)} Gruppe als Substituent tragen.

In einer bevorzugten Ausführungsform steht Ar für eine 1,3- oder 1,4-Phenyleneinheit. X ist in diesem Fall eine Schwefelbrücke -S- und/oder eine Einheit - SO- und/oder eine Einheit -SO₂- . In einer besonderen Ausführungsform kann - X- neben den genannten Gruppen auch -O- sein, wobei -X- in der Polymerkette bis zu vier verschiedene Einheiten bedeutet.

In einer besonderen Ausführungsform bedeutet -X- in den erfindungsgemäßen lonomeren die Einheiten -SO₂- und -O- zu gleichen stöchiometrischen Anteilen und -Ar- eine 1.4-Phenyleneinheit oder eine 1,4-Phenyleneinheit und eine Di-(4,4'-phenylen)-2,2'-propan-Einheit zu gleichen Teilen.

Die -S- Einheiten des erfindungsgemäßen lonomers können nachträglich in -SOoder -SO₂- Einheiten umgewandelt werden, wobei innerhalb desselben Polymers -X-Einheiten sowohl als -S- und -SO-Einheiten nebeneinander, als auch als -Sund -SO₂-Einheiten oder als -S-, -SO- und -SO₂-Einheiten vorliegen können.

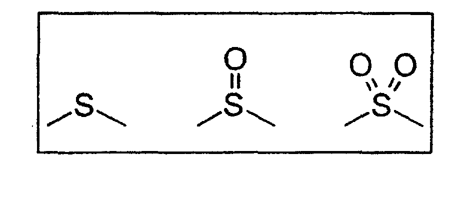

Entsprechend der folgenden Formel bedeutet -S- Sulfid, -SO- Sulfoxid und -SO₂-Sulfon.

Zur Herstellung der erfindungsgemäßen lonomere wird ein bromiertes Polyarylensulfid ( US-A-4 064 115, DE-A-3 136 255) mit Triphenylphosphin in Gegenwart eines Übergangsmetallhalogenids, vorzugsweise eines Nickel-, Kobalt-, Zink- oder Kupferhalogenids in einer polar aprotischen Flüssigkeit, die auch als Lösemittel dienen kann oder ohne weitere Zusätze (d.h. lösemittelfrei) bei einer Temperatur im Bereich von 140 bis 240°C, insbesondere 190 bis 220°C umgesetzt. Der Reaktionsansatz kann hierbei sowohl als Einphasensystem als auch als Zweiphasensystem vorliegen. In einer bevorzugten Ausführungsform wird als Ausgangspolymer bromiertes Poly-(1,4-phenylensulfid) verwendet, bei dem 10 bis 120% der Wiederholungseinheiten mit Brom substituiert sind. Erfindungsgemäß werden 10 bis 100% der Br-Einheiten des Polyarylensulfids durch Triphenylphosphin-Einheiten (PPh₃⁺) und gleichzeitig 0 bis 50% der Br-Einheiten durch Wasserstoff ersetzt. Insbesondere werden 10 bis 50% der Br-Einheiten durch Triphenylphosphin-Einheiten und gleichzeitig 10 bis 50% durch Wasserstoff ersetzt.

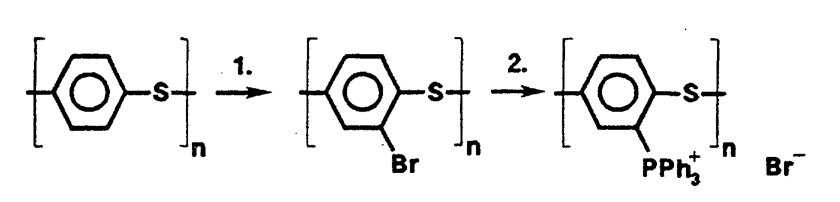

Die Reaktionszeit beträgt im allgemeinen 0,5 bis 24 Stunden, bevorzugt 3 bis 8 Stunden. Anschließend wird das Wasser-Lösemittel-Azeotrop abdestilliert und die Reaktionsmischung in einen Überschuß einer Flüssigkeit gegossen, die für das Triphenylphosphin ein Lösemittel und für das Phosphonium lonomer ein Fällungsmittel ist. Das ausgefällte Polymer wird abfiltriert und gewaschen.

Übergangsmetallhalogenide, die bei dem erfindungsgemäßen Verfahren zum Einsatz kommen sind beispielsweise Nickel-, Kobalt-, Zink- oder Kupferhalogenide oder Hydrate dieser Verbindungen, wie z.B. Nickel-(II)-bromid-Hexahydrat.

Als polar aprotische Flüssigkeiten kommen z.B. Nitrobenzen, Dimethylformamid, Dimethylsulfoxid und Benzonitril in Frage.

Das stöchiometrische Verhältnis Metallhalogenid/ Triphenylphosphin beträgt 0,001 bis 1,0, insbesondere 0,05 bis 0,5. Im allgemeinen werden 0,2 bis 10 Äquivalente Triphenylphosphin pro einfach bromierter Phenyleneinheit eingesetzt.

Die Konzentration des Triphenylphosphins bezogen auf die polar aprotische Flüssigkeit liegt erfindungsgemäß insbesondere im Bereich von 0,1 bis 10,0 mol/l liegen.

Flüssigkeiten, die nach dem erfindungsgemäßen Verfahren zur Fällung des resultierenden Phosphonium lonomers eingesetzt werden können sind beispielsweise C₁-C₈-Alkohole, Aceton und Toluol, bevorzugt Methanol oder andere Flüssigkeiten in denen die erfindungsgemäßen Verbindungen nicht löslich ist.

In einer weiteren bevorzugten Ausführungsform sind die beanspruchten Verbindungen erhältlich durch Umsetzung eines bromierten Polyarylensulfids mit Triphenylphosphin in Gegenwart eines Übergangsmetallhalogenids und eines Alkylmagnesiumhalogenids. Als Lösungsmittel kommen allgemein Ether, wie z.B. Diethylether oder Tetrahydrofuran, zum Einsatz. Das Reaktionsgemisch wird für 0,5 bis 24, vorzugsweise 2 bis 6 Stunden bei einer Temperatur im Bereich von 30°C bis 100°C, insbesondere 40 bis 70°C erhitzt, bevorzugt wird unter Rückfluß des betreffenden Lösungsmittels gearbeitet.
In einer bevorzugten Variante kann dem Erwärmen der Reaktionsmischung eine Reaktionsperiode von 5 bis 120 Minuten bei Raumtemperatur vorausgehen.

Das Stöchiometrieverhältnis Triphenylphosphin zu bromierter Phenyleneinheit des Polymers beträgt 0,2 bis 10 Äquivalente, vorzugsweise 1,0 bis 3,0 Äquivalente.
Das stöchiometrische Verhältnis von Übergangsmetallsalz zu Triphenylphosphin liegt im Bereich von 0,005 bis 0,2, insbesondere im Bereich von 0,03 bis 0,1. Die Konzentration von Triphenylphosphin bezogen auf das Lösemittel beträgt 0,05 bis 5,0 mol/l, vorzugsweise 0,1 bis 2,0 mol/l.

Als Alkylmagnesiumhalogenide kommen die gebräuchlichen Grignardreagenzien zum Einsatz, vorzugsweise Ethylmagnesiumhalogenid.

Zur Beendigung der Reaktion wird eine geringe Menge einer verdünnten mineralischen Säure zugegeben. Vorzugsweise arbeitet man mit einer 2N Mineralsäure, z.B. Salzsäure oder Schwefelsäure, wobei das zugegebene Volumen 1/10 bis 1/5 des Lösungsmittelvolumens beträgt.

Abschließend wird die Reaktionsmischung in einen Überschuß einer Flüssigkeit gegossen, die für das Triphenylphosphin ein Lösemittel und für das polymere Reaktionsprodukt ein Nichtlösemittel ist. Als Nichtlösemittel für das Polymer eignen sich die vorstehend genannten Flüssigkeiten. Das Polymer wird abfiltriert und gewaschen.

Um die thermische Stabilität der erfindungsgemäßen Phosphonium Ionomere, insbesondere in der Hydroxid-Form, noch weiter zu erhöhen, können diese entweder einem Ozonstrom, insbesondere mit einer Konzentration von 0,5 bis 200 g/m³, vorzugsweise 5 bis 50 g/m³, ausgesetzt werden oder mit einer verdünnten Lösung von Hydroperoxiden oder mit HNO₃, insbesondere mit einer Wasserstoffperoxidkonzentration von 3 bis 30%, behandelt werden. Dabei werden abhängig von den Reaktionsbedingungen die -S-Einheiten des Polymers zu -SO-, vorzugsweise mit H₂O₂ oder HNO₃, oder zu -SO₂-Einheiten, insbesondere mit Ozon oxidiert. Hierdurch kommt es zu einer Erhöhung der Stabilität der benachbarten Phosphor-Kohlenstoff-Bindung. Ferner resultiert aus der Oxidation zum Sulfoxid (-SO-) und zum Sulfon (-SO₂-) auch eine Erhöhung der Stabilität der -S-Brücke, insbesondere gegenüber dem Angriff durch Säuren.

Das Gegenion Z, welches bei Verwendung von Übergangsmetallhalogeniden für Halogen steht, kann durch lonenaustausch nach den bekannten technischen Verfahren gegen beliebige andere Gegenionen, z.B. CO₃²⁻, CN⁻, OCN⁻, OH⁻, NO₃⁻, SO₃²⁻, SO₂²⁻ oder SCN⁻ ausgetauscht werden.

Die erfindungsgemäßen Phosphonium lonomere oder Lösungen oder Dispersionen dieser Polymere in Fluiden, insbesondere in Lösemitteln in denen die lonomere löslich oder partiell löslich sind, können beispielsweise als Bakterizide oder zur Herstellung von Membranen verwendet werden, insbesondere für Membranen die zur Filtration von Gasen und Flüssigkeiten, zur Dialyse, Osmose, Umkehrosmose und Pervaporation eingesetzt werden.
Eine weitere Einsatzmöglichkeit der beschriebenen lonomere und von Membranen aus diesem Material ist die Verwendung als Anionenaustauscher und ihr Einsatz in elektrochemischen Zellen, insbesondere in Elektrodialysezellen als Anionentauschermembran oder Teil einer bipolaren Membran.

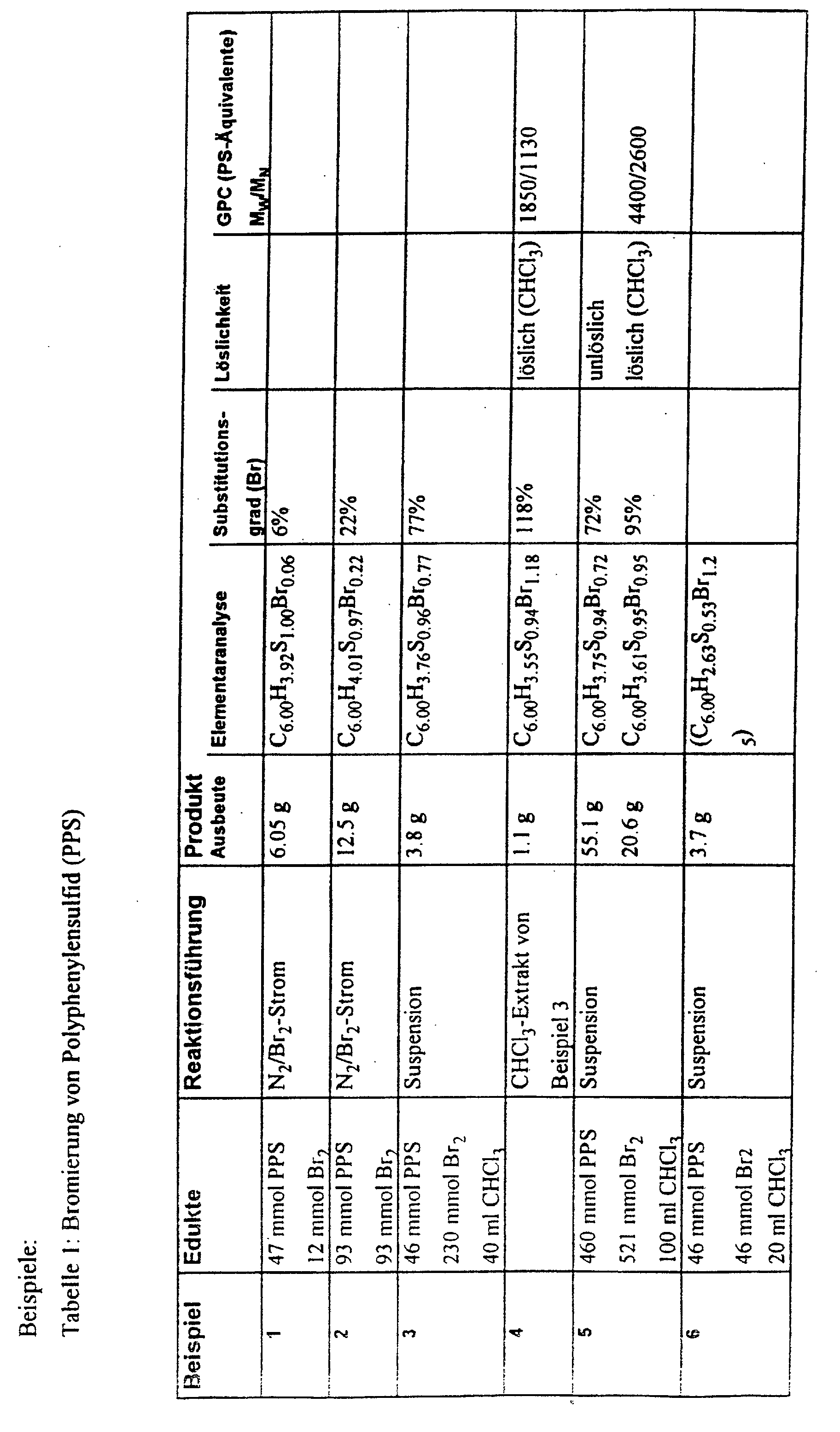

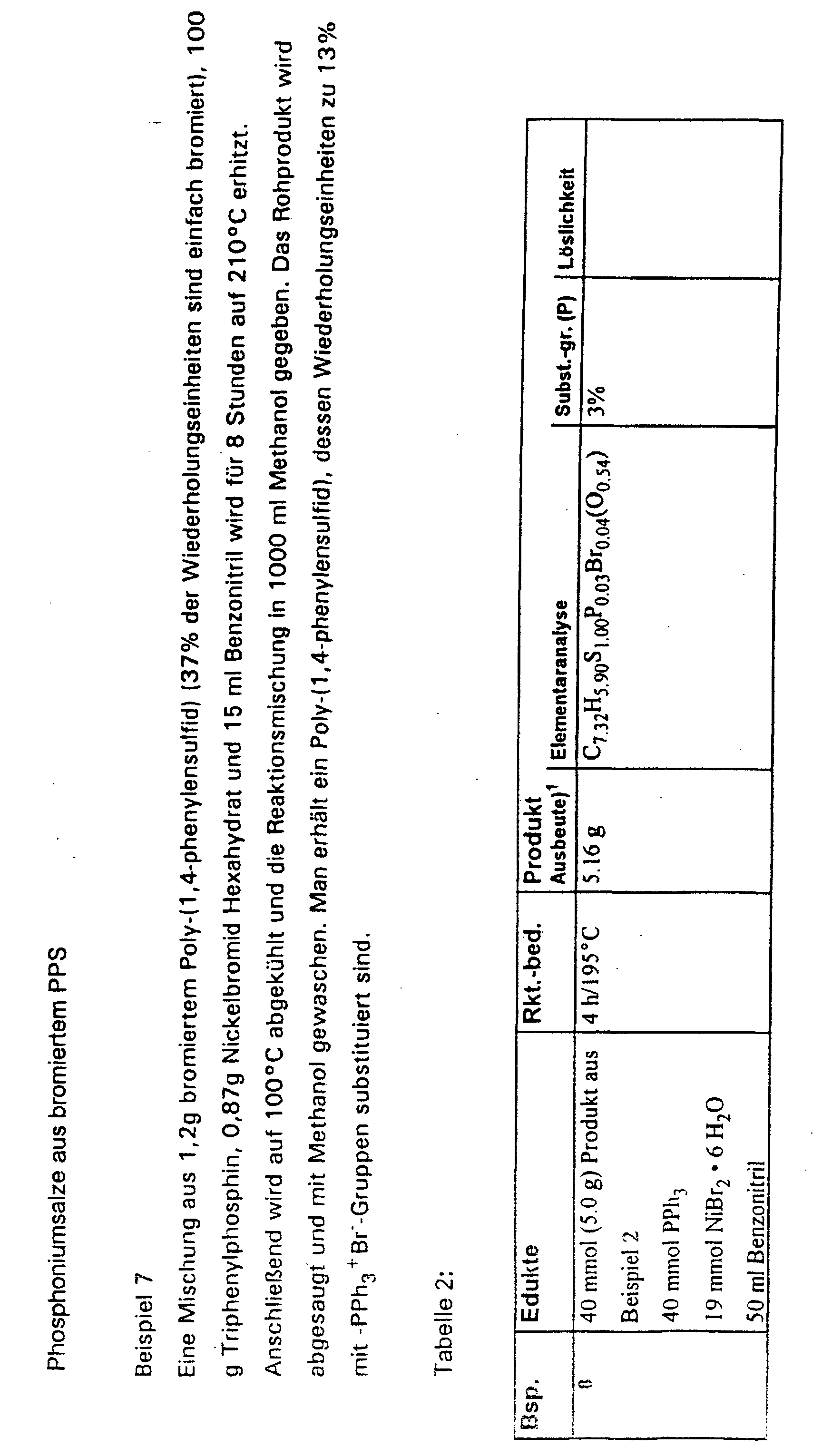

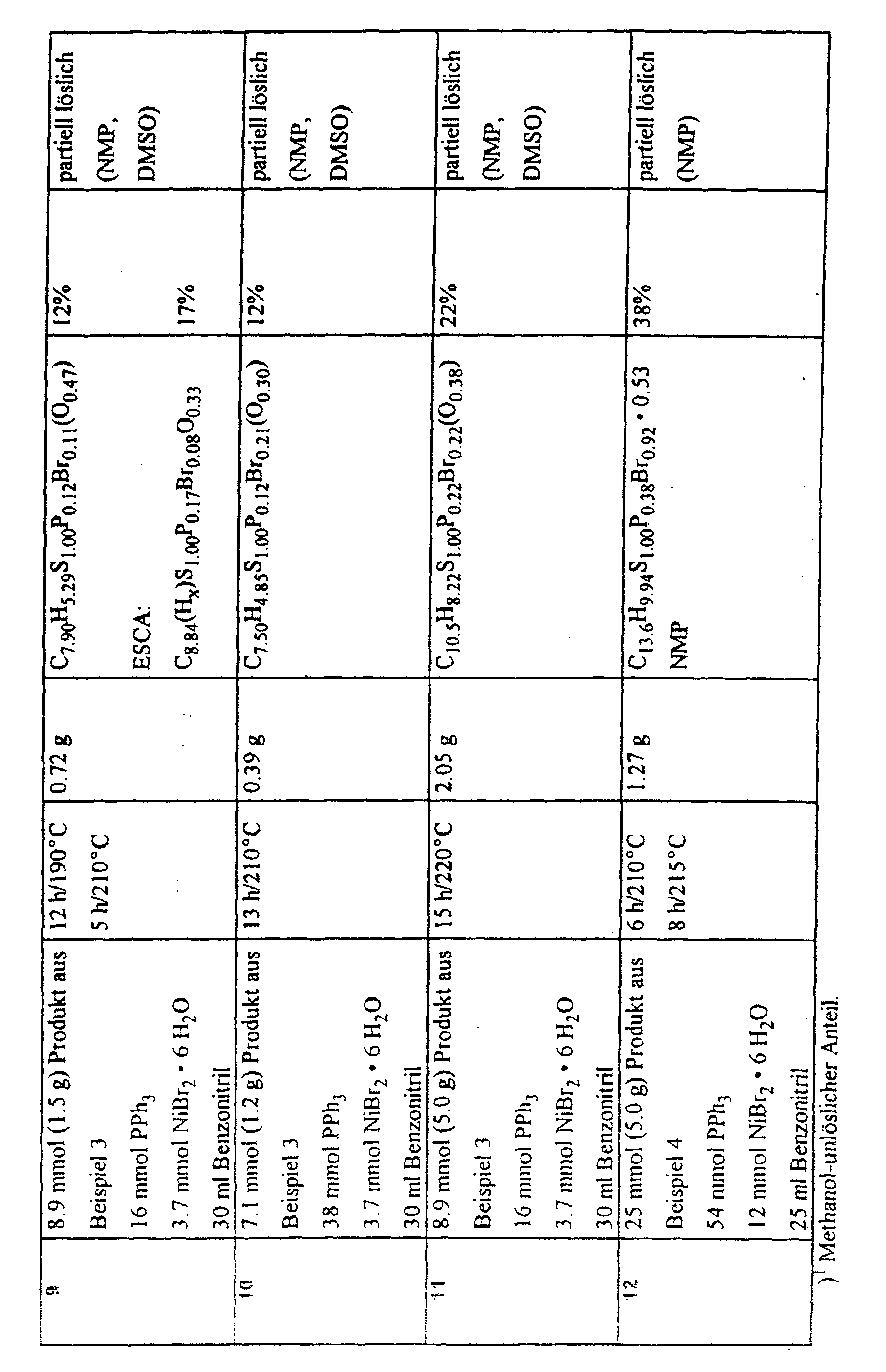

Die Reaktionsprodukte aus den Beispielen 8 bis 12 sind in Wasser unlöslich. "Partiell löslich" bedeutet, daß sich 1 g Polymer zu mindestens 80 % in 20g Lösemittel löst.

### Beispiel 13

Ein Poly-(1,4-phenylensulfid), dessen Wiederholungseinheiten zu 13% mit - PPh3⁺Br⁻-Gruppen substituiert sind, wird für 10 Minuten mit Ozon (50g/cm³, Trägergas Sauerstoff, handelsüblicher Ozongenerator der Firma Fischer, Meckendorf) begast. Dadurch werden alle Schwefelbrücken R-S-R des Polymers zu R-SO₂-R oxidiert.

Die Beispiele wurden ausgearbeitet mit Poly-(1,4-phenylensulfid) Fortron™ (Type 300 BO) (Hoechst AG, Fortron Group).

## Patentansprüche

1. Phosphonium lonomer, welches als statistisches Copolymer aus den Einheiten (1) und (2) aufgebaut ist
―Ar-X― (1)
und 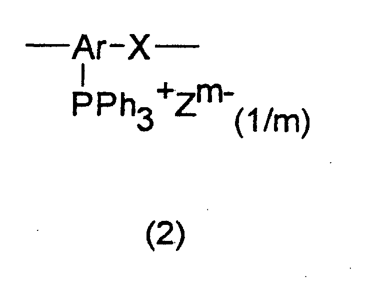 worin
Ar- für ein Phenylen-, Biphenylen-, Naphthylen-, Anthrylenoder einen anderen zweiwertigen aromatische Rest steht und innerhalb der Polymerkette verschiedene Einheiten bedeuten kann;
-X- ist eine -S-, -SO- und/oder -SO₂- Einheit;
wobei -X- innerhalb der Polymerkette gegebenfalls bis zu 3 verschiedene Einheiten bedeutet,
Z ist ein ein- oder mehrwertiges Gegenion;
Ph steht für einen Phenyirest;
m ist die Ladung des Gegenions
und wobei der mittlere Polymerisationsgrad im Bereich von 3 bis 2000 liegt.

2. Phosphonium Ionomer gemäß Anspruch 1, **dadurch gekennzeichnet, daß** Z mindestens ein Ion ausgewählt aus der folgenden Gruppe ist: CO₃²⁻, CN⁻, OCN⁻, Hal⁻, OH⁻, NO₃⁻, SO₃²⁻, SO₂²⁻ oder SCN⁻.

3. Phosphonium lonomer gemäß Anspruch 1, **dadurch gekennzeichnet, daß** 5-50% der Ar-Einheiten mit Brom substituiert sind.

4. Phosphonium lonomer gemäß Anspruch 1, **dadurch gekennzeichnet, daß** es ein mittleres Molekulargewicht im Bereich von 4000 bis 300 000 g/mol besitzt.

5. Phosphonium lonomer gemäß Anspruch 1, **dadurch gekennzeichnet, daß** alle Ar-Einheiten mindestens eine Triphenylphosphoniumgruppe PPh₃⁺ Z^{m-}_{(1/m)} als Substituent tragen.

6. Phosphonium lonomer gemäß Anspruch 1, **dadurch gekennzeichnet, daß** innerhalb lonomers -X- für eine -S- und -SO-Einheit, für eine -S und -SO₂-Einheit, für eine -SO- und -SO₂-Einheit oder für eine -S-, -SO- und -SO₂-Einheit steht.

7. Phosphonium-Ionomer gemäß Anspruch 1, **dadurch gekennzeichnet, daß** -X- für eine -SO₂- und eine -O-Einheit zu gleichen stöchiometrischen Anteilen und -Ar- für eine 1,4-Phenyleneinheit oder für eine 1,4-Phenyleneinheit und eine Di(4,4'-phenylen)-2,2'-propan-Einheit zu gleichen Teilen steht.

8. Phosphonium lonomer gemäß Anspruch 1, **dadurch gekennzeichnet, daß** das Polymer über -X-, -Ar- und/oder X-Ar-X-Einheiten vernetzt ist.

9. Verfahren zur Herstellung eines Phosphonium lonomers, welches als statistische Copolymere aus den Einheiten (1) und (2) aufgebaut ist,
-Ar-X- (1) 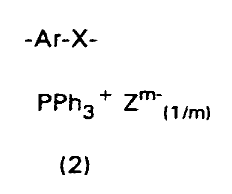
worin Ar, X, Ph, Z und m die vorstehend genannte Bedeutung haben, **dadurch gekennzeichnet, daß** ein bromiertes Polyarylensulfid und Triphenylphosphin in Gegenwart eines Nickel-, Kobalt-, Zink- oder Kupferhalogenids in einer polaren aprotischen Flüssigkeit oder ohne weitere Zusätze umgesetzt werden.

10. Verfahren nach Anspruch 9, **dadurch gekennzeichnet, daß** 10 bis 100% der Br-Einheiten des Polyarylensulfids durch PPh₃⁺-Einheiten ersetzt werden.

11. Verfahren nach Anspruch 9, **dadurch gekennzeichnet, daß** das stöchiometrische Verhältnis des Metallhalogenids zu Triphenylphosphin im Bereich von 0,1 bis 2,0 liegt.

12. Verfahren nach Anspruch 9, **dadurch gekennzeichnet, daß** 0,2 bis 10 Äquivalente Triphenylphosphin pro bromierter Phenylen-Einheit eingesetzt werden.

13. Verfahren nach Anspruch 9, **dadurch gekennzeichnet, daß** die Reaktionstemperatur im Bereich von 140 bis 240°C liegt.

14. Verfahren nach Anspruch 9, **dadurch gekennzeichnet, daß** das erhaltene Phosphonium lonomer in einem anschliessenden Schritt oxidiert wird wobei die -S-Brücken zu -SO- und/oder -SO₂- Einheiten umgewandelt werden.

15. Lösung oder Dispersion eines Polymers gemäß Anspruch 1 in einem Fluid.

16. Verwendung eines Polymers gemäß Anspruch 1 zur Herstellung von Membranen.

17. Membranen enthaltend ein Polymer gemäß Anspruch 1, **dadurch gekennzeichnet, daß** diese zur Filtration von Gasen und Flüssigkeiten, zur Dialyse, Osmose, Umkehrosmose und Pervaporation eingesetzt werden.

18. Verwendung eines Polymers gemäß Anspruch 1 als Bakterizid.

19. Verwendung eines Polymers gemäß Anspruch 1 und Membranen aus diesem Material als Anionenaustauscher.

20. Verwendung eines Polymers gemäß Anspruch 1 und Membranen aus diesem Material in elektrochemischen und Elektrodialysezellen.

## Claims

1. A phosphonium ionomer which, as random copolymers, is composed of the units (1) and (2)
―Ar-X― (1)
and 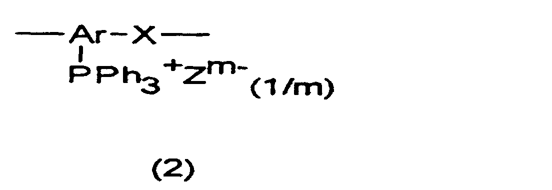 in which
Ar- is a phenylene radical or a biphenylene, naphthylene or anthrylene radical or another divalent aromatic radical and may be different units within the polymer chain;
-X- is an -S-, -SO- and/or -SO₂- unit,
where -X- within the polymer chain may be up to 3 different units;
Z is a monovalent or polyvalent opposite ion;
Ph is a phenyl radical;
m is the charge of the opposite ion
and the average degree of polymerization is in the range from 3 to 2000.

2. A phosphonium ionomer as claimed in claim 1, wherein Z is at least one ion selected from the following group: CO₃²⁻, CN⁻, OCN⁻, Hal⁻, OH⁻, NO₃⁻, SO₃²⁻, SO₂²⁻ and SCN⁻.

3. A phosphonium ionomer as claimed in claim 1, wherein 5-50% of the Ar units are substituted by bromine.

4. A phosphonium ionomer as claimed in claim 1, which has an average molecular weight in the range from 4000 to 300,000 g/mol.

5. A phosphonium ionomer as claimed in claim 1, wherein all Ar units carry at least one triphenylphosphonium group PPh₃⁺Z^{m-}_{(1/m)} as substituent.

6. A phosphonium ionomer as claimed in claim 1, wherein, within the ionomer, -X- is an -S- and -SO- unit, an -S- and -SO₂- unit, an -SO- and -SO₂- unit or an -S-, -SO- and -SO₂- unit.

7. A phosphonium ionomer as claimed in claim 1, wherein -X- is an -SO₂- and an -O- unit in equal stoichiometric amounts and -Ar- is a 1,4-phenylene unit or a 1,4-phenylene unit and a di(4,4'-phenylene)-2,2'-propane unit in equal proportions.

8. A phosphonium ionomer as claimed in claim 1, wherein the polymer is crosslinked via -X-, -Ar- and/or -X-Ar-X- units.

9. A process for the preparation of a phosphonium ionomer which, as random copolymers, is composed of the units (1) and (2)
-Ar-X- (1) 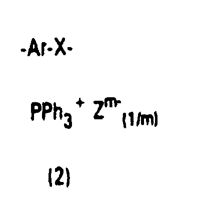
in which Ar, X, Ph, Z and m have the abovementioned meaning, wherein a brominated polyarylene sulfide and triphenylphosphine are reacted in the presence of a nickel, cobalt, zinc or copper halide in a polar aprotic liquid or without further additives.

10. The process as claimed in claim 9, wherein from 10 to 100% of the Br units of the polyarylene sulfide are replaced by PPh₃⁺ units.

11. The process as claimed in claim 9, wherein the stoichiometric ratio of the metal halide to triphenylphosphine is in the range from 0.1 to 2.0.

12. The process as claimed in claim 9, wherein from 0.2 to 10 equivalents of triphenylphosphine are used per brominated phenylene unit.

13. The process as claimed in claim 9, wherein the reaction temperature is in the range from 140 to 240°C.

14. The process as claimed in claim 9, wherein the phosphonium ionomer obtained is oxidized in a subsequent step, the -S- bridges being converted into -SO- and/or -SO₂- units.

15. A solution or dispersion of a polymer as claimed in claim 1 in a fluid.

16. The use of a polymer as claimed in claim 1 for the production of membranes.

17. A membrane containing a polymer as claimed in claim 1, wherein the said membrane is used for filtering gases and liquids, for dialysis, osmosis, reverse osmosis and pervaporation.

18. The use of a polymer as claimed in claim 1 as a bactericide.

19. The use of a polymer as claimed in claim 1 and membranes of this material as anion exchangers.

20. The use of a polymer as claimed in claim 1 and membranes of this material in electrochemical and electrodialysis cells.

## Revendications

1. Ionomère phosphonium qui est constitué en tant que copolymère statistique par les unités (1) et (2)
―Ar-X― (1)
et 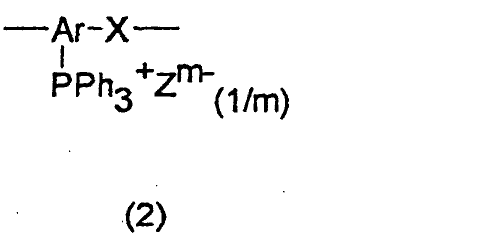 où
Ar représente un reste phénylène, biphénylène, naphtylène, anthrylène ou un autre reste aromatique bivalent et peut représenter différentes unités dans la chaîne polymère ;
-X- représente un groupe -S-, -SO- et/ou -SO₂ ; où -X- représente éventuellement jusqu'à 3 unités différentes dans la chaîne polymère,
Z représente un contre-ion mono- ou polyvalent ;
Ph représente un reste phényle ;
m représente la charge du contre-ion
et le degré de polymérisation moyen se trouve dans le domaine de 3 à 2000.

2. Ionomère phosphonium selon la revendication 1, **caractérisé en ce que** Z représente au moins un ion pris parmi le groupe suivant : CO₃²⁻, CN⁻, OCN⁻, Hal⁻, OH⁻, NO₃⁻, SO₃²⁻, SO₂²⁻ ou SCN⁻.

3. Ionomère phosphonium selon la revendication 1, **caractérisé en ce que** 5 à 50 % des unités Ar sont substitués par du brome.

4. Ionomère phosphonium selon la revendication 1, **caractérisé en ce qu'**il présente une masse moléculaire moyenne dans le domaine de 4000 à 300 000 g/mole.

5. Ionomère phosphonium selon la revendication 1, **caractérisé en ce que** toutes les unités Ar portent au moins un groupe triphénylphosphonium PPh₃⁺Z^{m-}_{(1/m)} comme substituant.

6. Ionomère phosphonium selon la revendication 1, **caractérisé en ce que** -X- représente dans l'ionomère une unité -S- et -SO-, une unité -S- et -SO₂, une unité -SO- et -SO₂ ou une unité -S-, -SO- et -SO₂.

7. Ionomère phosphonium selon la revendication 1, **caractérisé en ce que** -X- représente dans l'ionomère une unité -SO₂ et une unité -O- dans des taux stoechiométriques identiques et -Ar- représente une unité 1,4-phénylène ou une unité di-(4,4'-phénylène)-2,2'-propane en parties identiques.

8. Ionomère phosphonium selon la revendication 1, **caractérisé en ce que** le polymère est réticulé par des unités -X-, -Ar- et/ou X-Ar-X.

9. Procédé pour la préparation d'un ionomère phosphonium, qui est constitué en tant que copolymère statistique par des unités (1) et (2),
―Ar-X― (1)
et 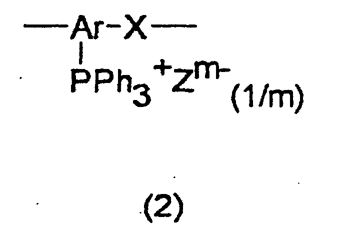 où Ar, X, Ph, Z et m possèdent la signification précitée, **caractérisé en ce qu'**on transforme un poly(sulfure d'arylène) bromé et une triphénylphosphine en présence d'un halogénure de nickel, de cobalt, de zinc ou de cuivre, dans un liquide aprotique polaire ou sans autres additifs.

10. Procédé selon la revendication 9, **caractérisé en ce que** 10 à 100 % des unités de Br du poly(sulfure d'arylène) sont remplacés par des unités PPh₃⁺.

11. Procédé selon la revendication 9, **caractérisé en ce que** le rapport stoechiométrique de l'halogénure de métal à la triphénylphosphine se trouve dans le domaine de 0,1 à 2,0.

12. Procédé selon la revendication 9, **caractérisé en ce qu'**on utilise 0,2 à 10 équivalents de triphénylphosphine par unité de phénylène bromé.

13. Procédé selon la revendication 9, **caractérisé en ce que** la température réactionnelle se trouve dans le domaine de 140 à 240°C.

14. Procédé selon la revendication 9, **caractérisé en ce que**, dans une étape ultérieure, on oxyde l'ionomère phosphonium obtenu, les ponts -S- sont transformés en unités -SO- et/ou -SO₂-.

15. Solution ou dispersion d'un polymère selon la revendication 1 dans un fluide.

16. Utilisation d'un polymère selon la revendication 1 pour la préparation de membranes.

17. Membranes renfermant un polymère selon la revendication 1, **caractérisés en ce qu'**on les utilise pour la filtration de gaz et de liquides, pour la dialyse, l'osmose, l'osmose inverse et la pervaporation.

18. Utilisation d'un polymère selon la revendication 1 en tant que bactéricide.

19. Utilisation d'un polymère selon la revendication 1 et membranes de cette matière comme échangeur d'anions.

20. Utilisation d'un polymère selon la revendication 1 et membranes de cette matière dans des cellules électrochimiques et d'électrodialyse.
